# EUROPEAN PATENT APPLICATION

(11) **EP 4 672 351 A1**
(43) Date of publication of application: **31.12.2025**
(21) Application number: 24760281.6
(22) Date of filing: 16.02.2024
(51) Int. Cl.: H01M 4/13, H01M 4/36, H01M 4/505, H01M 4/525, H01M 4/62, H01M 10/052, H01M 10/0562

(54) **POSITIVE ELECTRODE AND BATTERY USING SAME**

(30) Priority: 24.02.2023 JP 2023027836
(71) Applicant: Panasonic Intellectual Property Management Co., Ltd., Kadoma-shi, Osaka 571-0057 (JP)
(72) Inventor: TSUJITA, Takuji, Kadoma-shi, Osaka 571-0057 (JP); MASUMOTO, Yui, Kadoma-shi, Osaka 571-0057 (JP); TAKEZAWA, Hideharu, Kadoma-shi, Osaka 571-0057 (JP)
(74) Representative: Novagraaf International SA
(86) International application number: PCT/JP2024/005626
(87) International publication number: WO 2024/176982

(57) **Abstract**

A positive electrode (10) according to the present disclosure includes: a positive electrode active material (11) containing lithium and a transition metal; a first solid electrolyte (12) containing Li, M1, M2, and F; and a second solid electrolyte (13) differing in composition from the first solid electrolyte (12). The M1 is at least one selected from the group consisting of Ti and Nb. The M2 is at least one selected from the group consisting of Ca, Mg, Al, Y, and Zr. The positive electrode (10) has a first face (10a), the first face (10a)forming an interface with a solid electrolyte layer in a state where the positive electrode (10) is incorporated into a battery, and a first volume percentage of the first solid electrolyte (12) to a total amount of solid electrolytes, both present in a surface layer region (10b) including the first face (10a), is 10 vol.% or more.

## Description

### TECHNICAL FIELD

The present disclosure relates to a positive electrode and a battery using the same.

### BACKGROUND ART

In conventional batteries, an electrolyte can be decomposed by an active material. When the electrolyte is decomposed, a coating film of a decomposition product of the electrolyte is formed within an electrode. This leads to adverse effects such as an increase in the internal resistance of the batteries and a decrease in the cycle characteristics of the batteries.

By coating an active material with an appropriate coating material, decomposition of an electrolyte caused by the active material is suppressed. For example, Patent Literature 1 discloses coating of a positive electrode active material with a solid electrolyte including Li, Ti, M1, and F, where M1 is at least one element selected from the group consisting of Ca, Mg, Al, Y, and Zr.

### CITATION LIST

### Patent Literature

Patent Literature 1: WO 2021/187391

### SUMMARY OF INVENTION

### Technical Problem

Conventional techniques leave room for improvement regarding the decomposition of the electrolyte by the active material in high-temperature environments. That is, there is a demand for enhanced high-temperature resistance of batteries employing conventional techniques.

### Solution to Problem

The present disclosure provides a positive electrode including:
a positive electrode active material containing lithium and a transition metal;
a first solid electrolyte containing Li, M1, M2, and F; and
a second solid electrolyte differing in composition from the first solid electrolyte, wherein
the M1 is at least one selected from the group consisting of Ti and Nb,
the M2 is at least one selected from the group consisting of Ca, Mg, Al, Y, and Zr,
the positive electrode has a first face, the first face forming an interface with a solid electrolyte layer in a state where the positive electrode is incorporated into a battery, and
a first volume percentage of the first solid electrolyte to a total amount of solid electrolytes, both present in a surface layer region including the first face, is 10 vol.% or more.

### Advantageous Effects of Invention

According to the technique of the present disclosure, the high-temperature resistance of the battery can be enhanced.

### BRIEF DESCRIPTION OF DRAWINGS

FIG. 1 is a cross-sectional view schematically showing the configuration of a positive electrode according to Embodiment 1.
FIG. 2 is a cross-sectional view schematically showing the configuration of an example of the interface between the positive electrode and a solid electrolyte layer, as well as the vicinity of the interface.
FIG. 3 is a cross-sectional view schematically showing the configuration of another example of the interface between the positive electrode and the solid electrolyte layer, as well as the vicinity of the interface.
FIG. 4 is a cross-sectional view of a battery 100 according to Embodiment 2.

### DESCRIPTION OF EMBODIMENTS

Embodiments of the present disclosure are described below with reference to the drawings. The present disclosure is not limited to the following embodiments.

### (Embodiment 1)

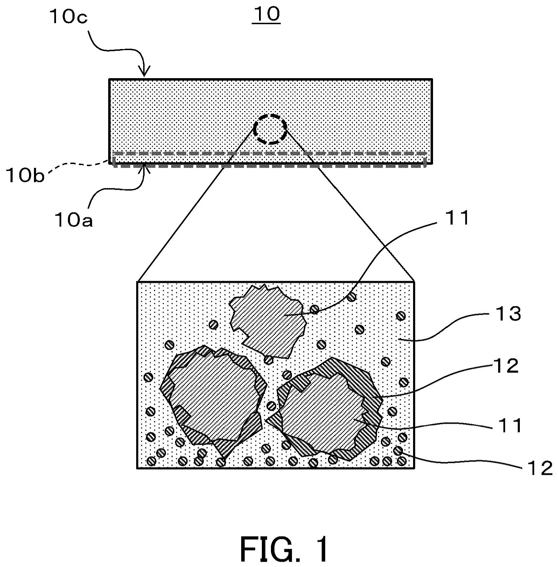

FIG. 1 is a cross-sectional view schematically showing the configuration of a positive electrode 10 according to Embodiment 1. The positive electrode 10 includes a positive electrode active material 11, a first solid electrolyte 12, and a second solid electrolyte 13. The positive electrode active material 11 contains lithium and a transition metal. The first solid electrolyte 12 contains Li, M1, M2, and F. M1 is at least one selected from the group consisting of Ti and Nb. M2 is at least one selected from the group consisting of Ca, Mg, Al, Y, and Zr. The second solid electrolyte 13 differs in composition from the first solid electrolyte 12. The positive electrode 10 has a first face 10a. In a state where the positive electrode 10 is incorporated into a battery, the first face 10a forms an interface with the solid electrolyte layer. A first volume percentage of the first solid electrolyte 12 to the total amount of the solid electrolytes, both present in a surface layer region 10b including the first face 10a, is 10 vol.% or more.

The first solid electrolyte 12 containing Li, M1, M2, and F is a solid electrolyte having a relatively high oxidation potential and having excellent oxidation resistance. The positive electrode 10 according to Embodiment 1 includes the first solid electrolyte 12 in the first volume percentage above in the surface layer region 10b including the first face 10a, and accordingly the decomposition of the solid electrolyte in the solid electrolyte layer in high-temperature environments can be reduced. Accordingly, the positive electrode 10 according to Embodiment 1 can enhance the high-temperature resistance of the battery.

In the positive electrode 10, as shown in FIG. 1, the first solid electrolyte 12 in particulate form may be dispersed in the positive electrode 10, and the first solid electrolyte 12 may constitute a coating film coating the positive electrode active material 11. That is, the first solid electrolyte 12 may include a solid electrolyte coating the positive electrode active material 11. According to this configuration, the positive electrode 10 according to Embodiment 1 can further enhance the high-temperature resistance of the battery.

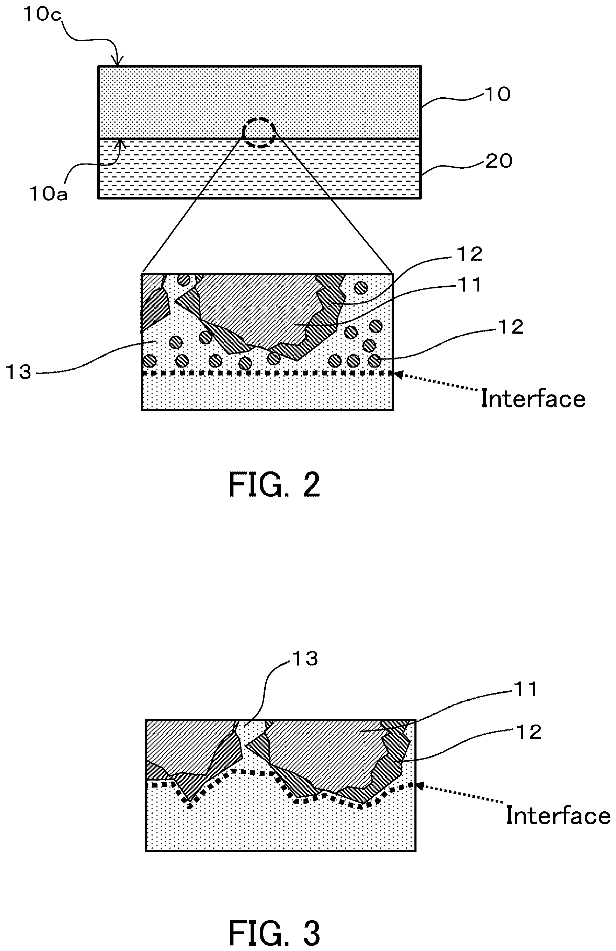

The first face 10a of the positive electrode 10 is a face that, in a state where the positive electrode 10 is incorporated into a battery, is in contact with a solid electrolyte layer and forms an interface with the solid electrolyte layer. Here, the interface between the positive electrode 10 and the solid electrolyte layer is described. FIG. 2 is a cross-sectional view schematically showing the configuration of an example of the interface between the positive electrode 10 and a solid electrolyte layer 20, as well as the vicinity of the interface. As shown in FIG. 2, the interface between the positive electrode 10 and the solid electrolyte layer 20 can be determined based on the difference between the materials constituting the positive electrode 10 and the materials constituting the solid electrolyte layer 20. Specifically, the interface between the positive electrode 10 and the solid electrolyte layer 20 can be identified by elemental mapping of a cross section that includes the interface and its vicinity. The elemental map can be obtained by energy dispersive X-ray spectroscopy (STEM-EDX) combined with a scanning transmission electron microscope. The positive electrode 10 includes at least two solid electrolytes, namely, the first solid electrolyte 12 and the second solid electrolyte 13, differing in composition from each other, and in some cases, further includes a conductive additive (not shown) and the like. Accordingly, as shown in FIG. 2, the interface between the positive electrode 10 and the solid electrolyte layer 20 can be determined based on the difference in component. However, in the case where, for example, in the positive electrode 10, the first solid electrolyte 12 is present only as a solid electrolyte coating the positive electrode active material 11, and the composition of the second solid electrolyte 13 is the same as the composition of the solid electrolyte constituting the solid electrolyte layer 20, it can be difficult to determine the interface between the positive electrode 10 and the solid electrolyte layer 20. In such a case, as shown in FIG. 3, the interface between the positive electrode 10 and the solid electrolyte layer 20 may be determined based on a region in which the positive electrode active material 11 is present in a cross section that includes the interface and its vicinity. Furthermore, in that case, a component that is not contained in the solid electrolyte layer 20 but is contained in the positive electrode 10, such as a conductive additive, can also be utilized for the determination of the interface, thereby enabling a more accurate determination of the interface between the positive electrode 10 and the solid electrolyte layer 20. Moreover, in the case where the composition of the first solid electrolyte is the same as the composition of the solid electrolyte constituting the solid electrolyte layer 20, a component that is not contained in the solid electrolyte layer 20 but is contained in the positive electrode 10, such as a conductive additive, can also be utilized for the determination of the interface, thereby enabling a more accurate determination of the interface between the positive electrode 10 and the solid electrolyte layer 20.

The first volume percentage can be determined by elemental mapping of a cross section that includes the interface between the positive electrode 10 and the solid electrolyte layer 20 and its vicinity. As described above, the elemental map can be obtained by STEM-EDX. The composition ratio of the first solid electrolyte 12 to the total amount of the solid electrolytes, both present in the surface layer region 10b including the first face 10a, is measured by elemental mapping, and the volume percentage is calculated from the result. Here, the surface layer region 10b refers to a region extending from the first face 10a to a thickness of 0.1 µm.

The first volume percentage may be, for example, 30 vol.% or more, 50 vol.% or more, or 70 vol.% or more. According to this configuration, the decomposition of the solid electrolyte in the solid electrolyte layer 20 can be further suppressed, thereby further enhancing the high-temperature resistance of the battery.

It is desirable that the first volume percentage be, for example, 80 vol.% or less. The first solid electrolyte 12 has highly excellent oxidation resistance but has slightly inferior ionic conductivity. Accordingly, by setting the first volume percentage to 80 vol.% or less, excellent ionic conductivity of the positive electrode 10 can be ensured.

In the positive electrode 10, the first volume percentage may differ from a second volume percentage of the first solid electrolyte 12 to the total amount of the solid electrolytes, both present in a central portion of the positive electrode 10. Here, the central portion of the positive electrode 10 refers to a region that is located between the first face 10a and a second face 10c of the positive electrode 10 and on the interior side of the positive electrode 10 relative to the surface layer region 10b. The second face 10c is the face opposite the first face 10a. By setting the first volume percentage and the second volume percentage to be different from each other as described above, it is possible to selectively impart the respective properties required to the vicinity of the interface of the positive electrode 10 with the solid electrolyte layer 20 and to the interior region of the positive electrode 10. For example, the following configuration may be employed in which the vicinity of the interface of the positive electrode 10 with the solid electrolyte layer 20 has properties that can effectively suppress the decomposition of the solid electrolyte in the solid electrolyte layer, while the interior region of the positive electrode 10 has higher ionic conductivity.

The first volume percentage may be greater than the second volume percentage. That is, a greater amount of the first solid electrolyte 12 may be disposed in the vicinity of the interface of the positive electrode 10 with the solid electrolyte layer 20 than in the interior region. According to this configuration, it is possible to effectively suppress the decomposition of the solid electrolyte in the solid electrolyte layer, while maintaining the ionic conductivity of the positive electrode 10 at a high level. By increasing the content of the first solid electrolyte 12 in the vicinity of the interface of the positive electrode 10 with the solid electrolyte layer 20, the decomposition of the solid electrolyte in the solid electrolyte layer 20 can be suppressed. By increasing the content of the second solid electrolyte, which has higher lithium-ion conductivity than the first solid electrolyte, in the interior region of the positive electrode 10, the ionic conductivity of the positive electrode 10 itself can be maintained at a high level.

The positive electrode active material 11, the first solid electrolyte 12, and the second solid electrolyte 13 are described in more detail below.

The positive electrode active material 11 is a material containing lithium and a transition metal and capable of occluding and releasing lithium.

Examples of the positive electrode active material 11 include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. In particular, in the case where a lithium-containing transition metal oxide or a lithium-containing transition metal phosphate is used as the positive electrode active material, it is possible to reduce the manufacturing cost of the battery and enhance the average discharge voltage. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate. At least one selected from these positive electrode active materials can be used. In particular, lithium nickel cobalt manganese oxide (hereinafter referred to as "NCM") is a positive electrode active material appropriate for combination with the first solid electrolyte 12.

The particles of the positive electrode active material 11 may be primary particles or secondary particles. The particles of the positive electrode active material 11 have an average particle diameter of, for example, 1 µm or more and 10 µm or less. The average particle diameter means the particle diameter at a cumulative volume equal to 50% in the volumetric particle size distribution (median diameter). The volumetric particle size distribution is measured with, for example, a laser diffraction particle size analyzer.

The first solid electrolyte 12 contains Li, M1, M2, and F, as described above. The first solid electrolyte 12 may consist substantially of Li, M1, M2, and F, or may consist of Li, M1, M2, and F. Here, "the first solid electrolyte consists substantially of Li, M1, M2, and F" means that the molar ratio of the sum of the amounts of substance of Li, M1, M2, and F to the total of the amounts of substance of all the elements constituting the first solid electrolyte 12 is 90% or more. In one example, the molar ratio may be 95% or more.

The ratio of the amount of substance of Li to the sum of the amounts of substance of M1 and M2 is, for example, 0.5 or more and 4.5 or less. In the case where the ratio is within this range, the first solid electrolyte 12 has excellent lithium-ion conductivity.

M2 may be at least one selected from the group consisting of Ca, Mg, and Al. In this case, the first solid electrolyte 12 has excellent lithium-ion conductivity.

M1 may be Ti, and M2 may be Al. In these cases, the first solid electrolyte 12 has excellent lithium-ion conductivity.

The first solid electrolyte 12 may have a composition represented by the following formula (1).

Li_{6-(5-x-2y)b}(Nb_{1-x-y}TiₓM2_{y})_{b}F₆ Formula (1)

In the above formula (1), M2 is at least one selected from the group consisting of Ca, Mg, Al, Y, and Zr. Furthermore, x, y, and b satisfy 0 < x < 1, 0 < y < 1, 0 < x + y ≤ 1, and 0.8 ≤ b ≤ 1.4.

In the case where the first solid electrolyte 12 has the composition represented by the above formula (1), the first solid electrolyte 12 has excellent lithium-ion conductivity.

The second solid electrolyte 13 differs in composition from the first solid electrolyte 12. In FIGS. 1, 2, and 3, the second solid electrolyte 13 is illustrated as the matrix; however, the second solid electrolyte 13 in particulate form may be dispersed within the positive electrode 10 in a manner similar to the first solid electrolyte 12.

Examples of the second solid electrolyte 13 include a halide solid electrolyte, a sulfide solid electrolyte, a polymer solid electrolyte, and a complex hydride solid electrolyte. Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. Examples of the polymer solid electrolyte include compounds of a polymer compound having an ethylene oxide structure and a lithium salt. The lithium salt can be, for example, at least one selected from the group consisting of LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. Examples of the complex hydride solid electrolyte include LiBH₄-LiI and LiBH₄-P₂S₅. The halide solid electrolyte may be a material represented by the following formula (2).

Li_{α}M_{β}X_{γ} Formula (2)

In the formula (2), α, β, and γ are each independently a value greater than 0, M is at least one selected from the group consisting of metalloid elements and metal elements other than Li, and X is at least one selected from the group consisting of F, Cl, Br, and I.

The "metalloid elements" include B, Si, Ge, As, Sb, and Te.

The "metal elements" include all the elements included in Groups 1 to 12 of the periodic table except hydrogen and all the elements included in Groups 13 to 16 of the periodic table except B, Si, Ge, As, Sb, Te, C, N, P, O, S, and Se. That is, the metal elements are a group of elements that can become a cation when forming an inorganic compound with a halogen element.

The second solid electrolyte 13 may be at least one selected from the group consisting of a sulfide solid electrolyte and a halide solid electrolyte. In this case, the positive electrode 10 has excellent lithium-ion conductivity. By combining the second solid electrolyte having higher lithium-ion conductivity than the first solid electrolyte with the first solid electrolyte having high oxidation resistance, it is possible to achieve both excellent lithium-ion conductivity and suppression of the decomposition of the solid electrolytes.

The second solid electrolyte 13 may be the halide solid electrolyte. In this case, the positive electrode 10 has excellent lithium-ion conductivity.

In the case where the second solid electrolyte 13 is the halide solid electrolyte, the second solid electrolyte 13 may contain Cl.

The first solid electrolyte 12 and the second solid electrolyte 13 may be free of sulfur. According to the above configuration, the generation of hydrogen sulfide gas can be prevented. Accordingly, a battery having enhanced safety can be achieved.

As described above, the first solid electrolyte 12 may include the solid electrolyte coating the positive electrode active material 11. That is, the positive electrode active material 11 may be coated with the first solid electrolyte 12. The inclusion of such a coated positive electrode active material in the positive electrode 10 inhibits direct contact between the positive electrode active material and a different material such as a solid electrolyte. Accordingly, the decomposition of the different material such as a solid electrolyte is suppressed. Furthermore, the first solid electrolyte 12 has excellent oxidation resistance and is accordingly less likely to be decomposed by the positive electrode active material 10. This enhances the discharge capacity of a battery including the positive electrode 10 and reduces the resistance value of the battery.

The positive electrode 10 may include other materials such as a conductive additive, an ion conductor, and a binder, in addition to the positive electrode active material 11, the first solid electrolyte 12, and the second solid electrolyte 13.

The conductive additive and the ion conductor are used to reduce the resistance of the positive electrode 10. Examples of the conductive additive include a carbon material and a conductive polymer compound. Examples of the carbon material include carbon black, graphite, acetylene black, carbon nanotubes, carbon nanofibers, graphene, fullerenes, and graphite oxide. Examples of the conductive polymer compound include polyaniline, polypyrrole, and polythiophene. At least one selected from these conductive additives can be used.

Examples of the ion conductor include gel electrolytes such as polymethyl methacrylate and polymethacrylic acid methyl ester, organic solid electrolytes such as polyethylene oxide, and inorganic solid electrolytes such as Li₇La₃Zr₂O₁₂. At least one selected from these ion conductors can be used.

The binder is used to enhance the binding properties of the materials constituting the positive electrode 10. Examples of the binder include polymer materials, such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The positive electrode 10 may further include a positive electrode current collector on the second face 10c side. The positive electrode current collector is a sheet or film formed, for example, of a metal material such as aluminum, an aluminum alloy, stainless steel, titanium, or a titanium alloy. The sheet or film may be porous or nonporous. The sheet or film is metal foil, metal mesh, or the like. The surface of the positive electrode current collector may be coated with a carbon material serving as a conductive auxiliary material.

The positive electrode 10 according to Embodiment 1 can be fabricated, for example, by mixing the materials constituting the positive electrode 10 and a solvent to prepare a positive electrode slurry, applying the positive electrode slurry to one side of the positive electrode current collector to form a coating film, and then drying the coating film. Regarding the materials constituting the positive electrode 10, for example, the volume ratio of the first solid electrolyte 12 and the second solid electrolyte 13 is adjusted so that the positive electrode 10 to be fabricated satisfies the first volume percentage. To fabricate the positive electrode 10 in which the first volume percentage and the second volume percentage differ from each other, for example, a plurality of positive electrode slurries having different volume ratios of the first solid electrolyte 12 and the second solid electrolyte 13 may be prepared as the positive electrode slurry to use the plurality of positive electrode slurries for the fabrication of the positive electrode 10. For example, the following method may be employed in which a first positive electrode slurry having a lower volume ratio of the first solid electrolyte 12 is applied onto the positive electrode current collector to form a first film, and a second positive electrode slurry having a higher volume ratio of the first solid electrolyte 12 is applied onto the first film to form a second film. The positive electrode 10 fabricated by such a method has a higher volume ratio of the first solid electrolyte 12 on the first face 10a in contact with the solid electrolyte layer 20. Accordingly, the positive electrode 10 is obtained in which the first volume percentage is higher than the second volume percentage.

### (Embodiment 2)

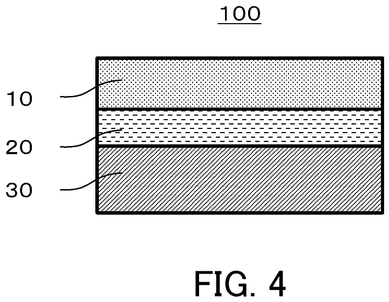

FIG. 4 is a cross-sectional view of a battery 100 according to Embodiment 2. The battery 100 includes the positive electrode 10, a negative electrode 30, and the solid electrolyte layer 20 disposed between the positive electrode 10 and the negative electrode 30. The positive electrode 10 is the positive electrode 10 according to Embodiment 1. According to this configuration, the decomposition of the solid electrolyte in the solid electrolyte layer 20 in high-temperature environments can be reduced. Accordingly, the battery 100 according to Embodiment 2 can exhibit enhanced high-temperature resistance.

The battery 100 according to Embodiment 2 may be an all-solid-state battery.

The negative electrode 30 includes a negative electrode active material. The negative electrode active material is a material capable of occluding and releasing lithium. Examples of the negative electrode active material capable of occluding and releasing lithium include lithium titanate, graphite, silicon, silicon-containing oxides, zinc alloys, lithium metal, and lithium alloys. At least one selected from these negative electrode active materials can be used.

The negative electrode 30 may include other materials such as a conductive additive, an ion conductor, and a binder. Materials that can be used in the positive electrode 10 as the conductive additive, the ion conductor, and the binder can also be used for the negative electrode 30.

The solid electrolyte layer 20 includes a solid electrolyte. The solid electrolyte can be a halide solid electrolyte, a sulfide solid electrolyte, an oxide solid electrolyte, a polymer solid electrolyte, a complex hydride solid electrolyte, or the like. The solid electrolyte layer 20 may be formed from a plurality of solid electrolytes differing in composition from each other. The solid electrolyte layer 20 may be a stack of a plurality of solid electrolyte membranes.

### (Other Embodiments)

### (Supplementary Note)

The above description of the embodiments discloses the following techniques.

### (Technique 1)

A positive electrode including:
a positive electrode active material containing lithium and a transition metal;
a first solid electrolyte containing Li, M1, M2, and F; and
a second solid electrolyte differing in composition from the first solid electrolyte, wherein
the M1 is at least one selected from the group consisting of Ti and Nb,
the M2 is at least one selected from the group consisting of Ca, Mg, Al, Y, and Zr,
the positive electrode has a first face, the first face forming an interface with a solid electrolyte layer in a state where the positive electrode is incorporated into a battery, and
a first volume percentage of the first solid electrolyte to a total amount of solid electrolytes, both present in a surface layer region including the first face, is 10 vol.% or more.

According to this configuration, the high-temperature resistance of the battery can be enhanced.

### (Technique 2)

The positive electrode according to Techinique 1, wherein
the first volume percentage differs from a second volume percentage of the first solid electrolyte to a total amount of solid electrolytes, both present in a central portion of the positive electrode.

According to this configuration, it is possible to selectively impart the respective properties required to the vicinity of the interface of the positive electrode with the solid electrolyte layer and to the interior region of the positive electrode. Accordingly, the high-temperature resistance of the battery can be more effectively enhanced.

### (Technique 3)

The positive electrode according to Technique 2, wherein
the first volume percentage is greater than the second volume percentage.

Accordingly, it is possible to effectively suppress the decomposition of the solid electrolyte in the solid electrolyte layer, while maintaining the ionic conductivity of the positive electrode at a high level. Accordingly, the high-temperature resistance of the battery can be more effectively enhanced.

### (Technique 4)

The positive electrode according to any one of Techniques 1 to 3, wherein
the first solid electrolyte has a composition represented by the following formula (1):

Li_{6-(5-x-2y)b}(Nb_{1-x-y}TiₓM2_{y})_{b}F₆ Formula (1)

where x, y, and b satisfy 0 < x < 1, 0 < y < 1, 0 < x + y ≤ 1, and 0.8 ≤ b ≤ 1.4.

Accordingly, the first solid electrolyte has excellent lithium-ion conductivity.

### (Technique 5)

The positive electrode according to any one of Techniques 1 to 4, wherein
a ratio of an amount of substance of Li to a sum of amounts of substance of the M1 and the M2 is 0.5 or more and 4.5 or less.

Accordingly, the first solid electrolyte has excellent lithium-ion conductivity.

### (Technique 6)

The positive electrode according to any one of Techniques 1 to 5, wherein
the M2 is at least one selected from the group consisting of Ca, Mg, and Al.

Accordingly, the first solid electrolyte has excellent lithium-ion conductivity.

(Technique 7)

The positive electrode according to Technique 6, wherein
the M2 is Al.

Accordingly, the first solid electrolyte has excellent lithium-ion conductivity.

### (Technique 8)

The positive electrode according to any one of Techniques 1 to 7, wherein
the M1 is Ti.

Accordingly, the first solid electrolyte has excellent lithium-ion conductivity.

### (Technique 9)

The positive electrode according to any one of Techniques 1 to 8, wherein
the second solid electrolyte is at least one selected from the group consisting of a sulfide solid electrolyte and a halide solid electrolyte.

Accordingly, the positive electrode has excellent lithium-ion conductivity.

### (Technique 10)

The positive electrode according to Technique 9, wherein
the second solid electrolyte is the halide solid electrolyte.

Accordingly, the positive electrode has excellent lithium-ion conductivity.

### (Technique 11)

The positive electrode according to any one of Techniques 1 to 10, wherein
the positive electrode active material includes lithium nickel cobalt manganese oxide.

Accordingly, the positive electrode has excellent discharge capacity.

### (Technique 12)

The positive electrode according to any one of Techniques 1 to 11, wherein
the first solid electrolyte includes a solid electrolyte coating the positive electrode active material.

Accordingly, the positive electrode can further enhance the high-temperature resistance of the battery.

### (Technique 13)

A battery including:
the positive electrode according to any one of Techniques 1 to 12;
a negative electrode; and
a solid electrolyte layer disposed between the positive electrode and the negative electrode.

Accordingly, the battery can exhibit enhanced high-temperature resistance.

### Examples

### (Example 1)

### [Preparation of First Solid Electrolyte]

In an argon atmosphere with a dew point of -60°C or less, the raw material powders LiF, TiF₄, and AlF₃ were weighed in a molar ratio of LiF:TiF₄:AlF₃ = 2.7:0.3:0.7. These were pulverized and mixed in a mortar to obtain the mixture. The mixture was then subjected to a milling process using φ5-mm zirconia balls and a planetary ball mill (Model P-7, manufactured by Fritsch GmbH) under the conditions of 12 hours and 500 rpm. Thus, the first solid electrolyte in powder form having a composition of Li_{2.7}Ti_{0.3}Al_{0.7}F₆ (hereinafter referred to as "LTAF") was obtained.

### [Preparation of Second Solid Electrolyte]

In an argon atmosphere with a dew point of -60°C or less, the raw material powders LiCl, ZrCl₄, and YCl₃ were weighed in a molar ratio of LiCl:ZrCl₄:YCl₃= 2.5:0.5:0.5. These were pulverized and mixed in a mortar to obtain the mixture. The mixture was then subjected to a milling process using φ5-mm zirconia balls and a planetary ball mill (Model P-7, manufactured by Fritsch GmbH) under the conditions of 12 hours and 500 rpm. Thus, the first solid electrolyte in powder form having a composition of Li_{2.5}Zr_{0.5}Y_{0.5}Cl₆ (hereinafter referred to as "LZYC") was obtained.

### [Fabrication of Coated Positive Electrode Active Material]

As the positive electrode active material, NCM powder (average particle diameter of 5 µm) was prepared. The first solid electrolyte was adhered to the surface of the NCM particle to form a coating layer. The coating layer was formed by compression shearing process using a particle composing machine (NOB-MINI, manufactured by Hosokawa Micron Corporation). Specifically, the NCM and the coating material were mixed in a mass ratio of 100:1, and the mixture was processed under the conditions of a rotational speed of 6000 rpm and a processing time of 50 min. Thus, the coated positive electrode active material of Example 1 was obtained. The target thickness of the coating layer was 10 nm.

### [Preparation of Positive Electrode Mixture]

In a dry argon atmosphere, the first solid electrolyte and the second solid electrolyte were mixed in a volume ratio of first solid electrolyte:second solid electrolyte = 30:70 to fabricate a solid electrolyte mixture. Next, the coated positive electrode active material, the solid electrolyte mixture, and a conductive additive were mixed in an agate mortar in a mass ratio of coated positive electrode active material:solid electrolyte mixture:conductive additive = 38.5:60.5:1 to prepare a positive electrode mixture. As the conductive additive, carbon nanofiber (manufactured by Showa Denko K.K.) was used.

### [Preparation of Negative Electrode Mixture]

In a dry argon atmosphere, Li₃YBr₂Cl₄ serving as the solid electrolyte, Li₄Ti₅O₁₂ (average particle diameter of 2.5 µm) serving as the negative electrode active material, and a conductive additive were mixed in an agate mortar to prepare a negative electrode mixture. The volume ratio of the solid electrolyte and the negative electrode active material was 40:60. As the conductive additive, carbon nanofiber (manufactured by Showa Denko K.K.) was used. The ratio of the mass of the conductive additive to the sum of the masses of the solid electrolyte and the negative electrode active material was 1 mass%.

### [Fabrication of Secondary Battery]

In an insulating outer cylinder having an inner diameter of 9.4 mm, 20.5 mg of the positive electrode mixture, 50 mg of LiₓYCl₆, 60 mg of Li₃YBr₂Cl₄, and 28.8 mg of the negative electrode mixture were stacked in this order. The positive electrode mixture, the solid electrolyte, and the negative electrode mixture were pressure-formed at a pressure of 720 MPa. Thus, a stack having a positive electrode, an electrolyte layer, and a negative electrode was fabricated. Next, current collectors made of stainless steel were placed on the upper and lower portions of the stack, and current collector leads were attached to the current collectors. Finally, the insulating outer cylinder was hermetically sealed with an insulating ferrule so that the inside of the insulating outer cylinder was isolated from the external atmosphere.

### [Preliminary Experiment]

For the battery fabricated in Example 1, an elemental map of a cross section that includes the interface between the positive electrode and the solid electrolyte layer and its vicinity was obtained by STEM-EDX, and the first volume percentage was determined by elemental mapping. As a result, the first volume percentage was found to be a value almost equal to the percentage of the volume of the first solid electrolyte to the sum of the volumes of the first solid electrolyte and the second solid electrolyte, namely, 30 vol.%. This result confirmed that the percentage of the volume of the first solid electrolyte to the sum of the volumes of the first solid electrolyte and the second solid electrolyte can be regarded as equal to the first volume percentage. Accordingly, the first volume percentage in Example 1 was determined to be 30 vol.%. The first volume percentage was determined in the same manner for subsequent Examples 2, 3, and 4.

### [Battery Evaluation]

To evaluate the high-temperature resistance of the battery, the discharge capacity retention rate was determined. First, the secondary battery fabricated as described above was subjected to initial charge and discharge to determine the initial discharge capacity. Next, the battery was stored at 125°C for 100 hours. Then, charge and discharge were further conducted to determine the discharge capacity after storage. From these results, the discharge capacity retention rate ((discharge capacity after storage/initial discharge capacity) × 100) was calculated. The initial charge and discharge and the charge and discharge after storage were conducted by performing a constant-current charge at a current of 0.05C until the voltage reached 2.75 V and then performing a constant-current discharge at a current of 0.05C until the voltage reached 0.9 V. The result is shown in Table 1.

### (Example 2)

A battery was fabricated and evaluated in the same manner as in Example 1, except that the volume ratio of the first solid electrolyte and the second solid electrolyte was changed to first solid electrolyte:second solid electrolyte = 50:50. The result is shown in Table 1.

### (Example 3)

A battery was fabricated and evaluated in the same manner as in Example 1, except that the volume ratio of the first solid electrolyte and the second solid electrolyte was changed to first solid electrolyte:second solid electrolyte = 70:30. The result is shown in Table 1.

### (Example 4)

A battery was fabricated and evaluated in the same manner as in Example 1, except that the volume ratio of the first solid electrolyte and the second solid electrolyte was changed to first solid electrolyte:second solid electrolyte = 10:90. The result is shown in Table 1.

### (Comparative Example 1)

As a solid electrolyte of the positive electrode, only Li₃YCl₆ was used instead of the "solid electrolyte mixture" of Example 1. Except for this point, a battery was fabricated and evaluated in the same manner as in Example 1. The result is shown in Table 1. The Li₃YCl₆ used in Comparative Example 1 was prepared in the following manner. In a dry argon atmosphere, the raw material powders LiCl and YCl₃ were weighed in a molar ratio of Li:Y:Cl = 3:1:6. These were pulverized and mixed in a mortar to obtain the mixture. The mixture was then subjected to a milling process using a planetary ball mill under the conditions of 25 hours and 600 rpm. Thus, a solid electrolyte in powder form having a composition of Li₃YCl₆ was obtained. Li₃YCl₆ is hereinafter referred to as "LYC". Although the positive electrode active material was coated with LTAF, the LTAF content is present in a trace amount. As in the description given in the above [Preliminary Experiment], the first volume percentage in the positive electrode of Comparative Example 1 can be regarded as substantially 0 vol.%.

### (Comparative Example 2)

As a solid electrolyte of the positive electrode, only the second solid electrolyte prepared in Example 1 was used instead of the "solid electrolyte mixture" of Example 1. Except for this point, a battery was fabricated and evaluated in the same manner as in Example 1. The result is shown in Table 1. As in Comparative Example 1, in Comparative Example 2, the first volume percentage in the positive electrode can be regarded as substantially 0 vol.%.

### (Comparative Example 3)

A battery was fabricated and evaluated in the same manner as in Example 1, except that the volume ratio of the first solid electrolyte and the second solid electrolyte was changed to first solid electrolyte:second solid electrolyte = 5:95. The result is shown in Table 1.

**[Table 1]**

| | Example 1 | Example 2 | Example 3 | Example 4 | Comparative Example 1 | Comparative Example 2 | Comparative Example 3 |
|---|---|---|---|---|---|---|---|
| Solid electrolyte in positive electrode | LZYC (70 vol%) | LZYC (50 vol%) | LZYC (30 vol%) | LZYC (90 vol%) | LYC | LZYC | LZYC (95 vol%) |
| | LTAF (30 vol%) | LTAF (50 vol%) | LTAF (70 vol%) | LTAF (10 vol%) | | | LTAF (5 vol%) |
| First volume percentage | 30 vol% | 50 vol% | 70 vol% | 10 vol% | - | - | 5 vol% |
| Discharge capacity retention rate | 88.7% | 90.2% | 90.5% | 88.4% | 87.8% | 88.1% | 88.1% |

As shown in Table 1, the discharge capacity retention rates of the batteries of Examples 1, 2, 3, and 4 exceeded the discharge capacity retention rates of the batteries of Comparative Examples 1, 2, and 3. This result confirmed that a battery including a positive electrode having a first volume percentage of 10 vol.% or more has excellent high-temperature resistance.

### INDUSTRIAL APPLICABILITY

The technique of the present disclosure is useful for lithium secondary batteries.

## Claims

1. A positive electrode comprising:
a positive electrode active material comprising lithium and a transition metal;
a first solid electrolyte comprising Li, M1, M2, and F; and
a second solid electrolyte differing in composition from the first solid electrolyte, wherein
the M1 is at least one selected from the group consisting of Ti and Nb,
the M2 is at least one selected from the group consisting of Ca, Mg, Al, Y, and Zr,
the positive electrode has a first face, the first face forming an interface with a solid electrolyte layer in a state where the positive electrode is incorporated into a battery, and
a first volume percentage of the first solid electrolyte to a total amount of solid electrolytes, both present in a surface layer region comprising the first face, is 10 vol.% or more.

2. The positive electrode according to claim 1, wherein
the first volume percentage differs from a second volume percentage of the first solid electrolyte to a total amount of solid electrolytes, both present in a central portion of the positive electrode.

3. The positive electrode according to claim 2, wherein
the first volume percentage is greater than the second volume percentage.

4. The positive electrode according to claim 1, wherein
the first solid electrolyte has a composition represented by the following formula (1):
Li_{6-(5-x-2y)b}(Nb_{1-x-y}TiₓM2_{y})_{b}F₆ Formula (1)
where x, y, and b satisfy 0 < x < 1, 0 < y < 1, 0 < x + y ≤ 1, and 0.8 ≤ b ≤ 1.4.

5. The positive electrode according to claim 1, wherein
a ratio of an amount of substance of Li to a sum of amounts of substance of the M1 and the M2 is 0.5 or more and 4.5 or less.

6. The positive electrode according to claim 1, wherein
the M2 is at least one selected from the group consisting of Ca, Mg, and Al.

7. The positive electrode according to claim 6, wherein
the M2 is Al.

8. The positive electrode according to claim 1, wherein
the M1 is Ti.

9. The positive electrode according to claim 1, wherein
the second solid electrolyte is at least one selected from the group consisting of a sulfide solid electrolyte and a halide solid electrolyte.

10. The positive electrode according to claim 9, wherein
the second solid electrolyte is the halide solid electrolyte.

11. The positive electrode according to claim 1, wherein
the first solid electrolyte comprises a solid electrolyte coating the positive electrode active material.

12. A battery comprising:
the positive electrode according to any one of claims 1 to 11;
a negative electrode; and
a solid electrolyte layer disposed between the positive electrode and the negative electrode.
